# EUROPÄISCHE PATENTSCHRIFT

(11) **EP 1 645 501 B1**
(45) Veröffentlichungstag und Bekanntmachung des Hinweises auf die Patenterteilung: **20.08.2008**
(21) Anmeldenummer: 05021680.3
(22) Anmeldetag: 04.10.2005
(51) Int. Cl.: B63G 8/22, B63G 8/40

(54) **Anblasvorrichtung für ein Unterseeboot**
Blowing device for a submarine
Dipositif de soufflage de gaz pour un sous-marin

(30) Priorität: 05.10.2004 DE 102004048311
(43) Veröffentlichungstag der Anmeldung: 12.04.2006
(73) Patentinhaber: Howaldtswerke-Deutsche Werft GmbH, 24143 Kiel (DE)
(72) Erfinder: Büchner, Richard, 23611 Bad Schwartau (DE); Linster, Wolfgang, 24598 Heidmühlen (DE)
(74) Vertreter: Vollmann, Heiko

(56) Entgegenhaltungen:
- DE-C- 194 222
- FR-A- 604 882
- US-A- 4 231 393
- US-A1- 2003 154 900

## Beschreibung

Die Erfindung betrifft eine Anblasvorrichtung für ein Unterseeboot mit den im Oberbegriff des Anspruchs 1 angegebenen Merkmalen.

Unterseeboote weisen im Bereich Ihres Bugs und Ihres Hecks Tauchzellen auf, die zum Tauchen mit Wasser geflutet werden, so dass das Wasser den Gasinhalt der Tauchzellen verdrängt und sich der Auftrieb des Unterseebootes verringert. Zum Auftauchen bzw. zum Verringern der Tauchtiefe wird in umgekehrter Weise ein Druckgas in die Tauchzellen eingeblasen. Hierdurch wird das Wasser aus den Tauchzellen verdrängt und somit der Auftrieb des Unterseeboots wieder erhöht. Die Tauchzellen befinden sich nicht im druckfesten Teil des Unterseebootes und besitzen nur eine geringe Festigkeit gegen Innendruck.

DE 194 222 C beschreibt eine Anblasvorrichtung gemäß dem Oberbegriff des Anspruchs 1.

FR 604882 A beschreibt eine Vorrichtung zum Anblasen einer Tauchzeile. Dabei ist ein automatisches Absperrventil für eine Tiefenregelung eines Unterseebootes vorgesehen. Dieses Absperrventil ist als ein Servoventil ausgebildet. Das Servoventil wird bei Erreichen einer bestimmten Tauchtiefe bzw. bei Erreichen eines bestimmten Wasserdruckes in einer Tauchzelle über die von dem Wasserdruck zur Verfügung gestellten Servokraft gestellt. Die Vorrichtung ist selbstregelnd. Nachteilig ermöglicht sie es aber nicht, die Tauchzelle z.B. für einen Notaufstieg bewusst anzublasen.

In etwaigen Notsituationen während der Tauchphase müssen Unterseeboote die Fähigkeit besitzen, möglichst schnell an die Wasserober fläche zurückkehren zu können, um die Besatzung zu retten und/oder größere Schäden an dem Unterseeboot zu verhindern. Hierzu ist es erforderlich, das Ballastwasser vorzugsweise in den bugseitigen Tauchzellen innerhalb kürzester Zeit auszublasen, ohne hierbei den maximal zulässigen Überdruck in den Tauchzellen zu überschreiten.

Für das notfallmäßige Auftauchen sind Unterseeboote im Allgemeinen mit Notanblasvorrichtungen ausgestattet. Das für das Ausblasen der Tauchzellen benötigte Gas wird bei bekannten Notblasanrichtungen entweder auf chemischem Wege an Bord des Unterseeboots erzeugt oder in gespeicherter Form mitgeführt.

So offenbaren beispielsweise die DE 33 20 159 A1, DE 197 04 587 A1, DE 43 38 340 A1 und EP 1 415 906 A1 Vorrichtung zur Auftriebserzeugung bzw. Notanblasvorrichtungen, in denen das Gas zum Ausblasen eines Auftriebskörpers bzw. der Tauchzellen durch chemische Reaktion und/oder katalytische Zersetzung eines in flüssiger Form mitgeführten Energieträgers erzeugt wird. Die hier verwendeten Gasgeneratoren sind sehr teuer und können nach einer Benutzung nicht oder nur nach einer Grundüberholung wieder verwendet werden. Da diese Grundüberholung mit einer Dockung und langen Ausfallzeiten des Unterseeboots verbunden ist, sind damit ebenfalls hohe Kosten verbunden. Ferner besteht in großen Tiefen wegen der Temperatur und Löslichkeit der verwendeten Gase eine große Unsicherheit hinsichtlich der Leistungsfähigkeit der Gasgeneratoren.

Eine weitere bekannte. Notanblasvorrichtung verwendet Druckluft zum Befüllen der Tauchzellen. Diese Druckluft ist an Bord des Unterseeboots in Druckflaschen bei einem Druck von 250 bar gespeichert. Im Einsatzfall wird die Druckluft über ein geregeltes Absperrventil den Tauchzellen zugeführt, die für einen Überdruck von ca.. 1,5 bar ausgelegt sind. Die Druckregelung des Ventils erfolgt direkt über eine Membran, die mit dem Tauchdruck und dem Druck in den Tauchzellen beaufschlagt wird. Da über die Membran relativ geringe Stellkräfte aufgebracht werden können, ist ein entsprechend großer Ventilkolben des Absperrventils erforderlich, wodurch sich große Ventilabmessungen und ein großes Ventilgewicht ergeben. Da Ventile in der benötigen Größe nur in Form von Sonderanfertigungen verfügbar sind, ist deren Herstellung bzw. deren Beschaffung mit entsprechend großen Kosten verbunden. Des Weiteren kann die Größe des Absperrventils zu Problemen bezüglich der Ventildichtigkeit führen und aufgrund der manuellen Handhabung ist auch die Regelung des Absperrventils bezüglich der Einhaltung von zulässigen Regeltolleranzen nicht unproblematisch.

Die Aufgabe dieser Erfindung ist es, eine verbesserte Notanblasvorrichtung zu schaffen, die ein schnelles Auftauchen des Unterseeboots aus großen Tiefen zuverlässig gewährleistet, dabei einfach zu handhaben ist sowie ohne großen technischen und finanziellen Aufwand erprobt und gewartet werden kann.

Diese Aufgabe wird erfindungsgemäß durch eine Anblasvorrichtung mit den im Anspruch 1 angegebenen Merkmalen gelöst, wobei sich bevorzugte Ausführungsformen aus den Unteransprüchen, der nachfolgenden Beschreibung sowie der Zeichnung ergeben:

Die Anblasvorrichtung für ein Unterseeboot weist mindestens einen Druckgasspeicher zum Befüllen mindestens einer Tauchzelle mit Druckgas, eine Leitungsverbindung zwischen dem Druckgasspeicher und der Tauchzelle und ein in der Leitungsverbindung angeordnetes Absperrventil auf. Das Absperrventil ist gemäß der Erfindung servogesteuert. Zum Stellen des Absperrventils ist ein Servozylinder vorgesehen, dessen Kolben zweiseitig mit Druckgas beaufschlagbar ist, wobei der Druck zu einer Seite des Kolbens regelbar ist.

Zum Befüllen der Tauchzelle mit einem unter Druck stehenden Gas, insbesondere Luft, wird der Inhalt des Druckgasspeichers zumindest teilweise über die Leitungsverbindung in die Tauchzelle überführt. Dazu wird ein in der Leitungsverbindung vorgesehenes Absperrventil geöffnet und bei Erreichen eines vorgegebenen Gasdrucks in der Tauchzelle wieder verschlossen. Vorzugsweise ist zum Aktivieren dieses Anblasvorgangs ein Schaltventil vorgesehen. Zum Stellen des Absperrventils ist erfindungsgemäß eine Steuerung vorgesehen, die zum Aufbringen der zum Öffnen und/oder Schließen des Absperrventils benötigten Stellkräfte eine Servoenergie zur Verfügung gestellt. Diese Servoenergie unterstützt die Steuerung beim Stellen des Absperrventils oder stellt die zum Stellen erforderliche Energie vorteilhafter Weise vollständig zur Verfügung. So ermöglicht die Servosteuerung das Aufbringen großer Stellkräfte, so dass das Absperrventil vergleichsweise kompakt ausgebildet und kostengünstig hergestellt werden kann. Ferner kann das Absperrventil auf diese weise deutlich schneller geöffnet und verschlossen werden, als es bei einem manuell gesteuerten Absperrventil der Fall ist. Dies ermöglicht ein schnelleres Anblasen der Tauchzelle. Die Servoenergie wird zweckmäßig fluidtechnisch, d.h. hydraulisch oder pneumatisch erzeugt.

Bevorzugt wird die Kraft zum Stellen des Absperrventils durch Druckgas, vorzugsweise aus dem Druckgasspeicher erzeugt. Das Druckgas stellt den Energieträger für den zum Öffnen und Schließen des Absperrventils erforderlichen Arbeitsprozess. Hierzu kann die Steuerung des Absperrventils über eine eigene Druckgasversorgung verfügen. Vorteilhaft wird aber als Druckgas zum Stellen des Absperrventils das Druckgas verwendet, welches auch zum Anblasen der Tauchzellen vorgesehen ist. Auf diese Weise ist keine weitere separate Druckgasquelle mit entsprechenden Versorgungsleitungen erforderlich.

Bei dem Servozylinder handelt es sich vorteilhaft um einen Kolbenzylinder, der das Druckgas zu einer Volumenänderungsarbeit nutzt, wodurch der Kolben bewegt wird. Durch entsprechende Ankopplung des Kolbens des Servozylinders an den Schließkörper des Absperrventils wird dieser durch die Kolbenbewegung gestellt.

Der Servozylinder weist sowohl oberhalb als auch unterhalb des Kolbens jeweils einen Druckraum auf, der mit dem Druckgas beaufschlagt werden kann. Dementsprechend ist der Servozylinder doppeltwirkend ausgebildet. Vorteilhaft wird der Druck in einem der Druckräume konstant gehalten, während der Druck in dem anderen Druckraum reguliert, d.h. vergrößert oder vorzugsweise verringert werden kann. Die hierdurch entstehende Druckdifferenz zwischen den beiden Druckkammern bewirkt, dass der Kolben in Richtung des auf den Kolben wirkenden Überdrucks bewegt und hierdurch das Absperrventil gestellt wird.

Zweckdienlich sind der Druckgasspeicher und der Servozylinder miteinander gedrosselt leitungsverbunden.

Vorteilhaft werden die beiden Druckkammern des Servozylinders mit dem Druckgas des Druckgasspeichers zum Befüllen der Tauchzellen beaufschlagt. Je nach Befüllungsgrad des Druckspeichers kann der Druck des Druckgases beispielsweise bis zu 250 bar betragen. Insbesondere in der Leitungszuführung zu dem regelbaren Druckraum, dessen Druck durch Ablassen des Druckgases reguliert wird, ist es sinnvoll, eine Drossel vorzusehen, um den Volumenstrom des zuströmenden Druckgases bei gleichzeitigem Ablassen des Druckgases so gering zu halten, dass in diesem Druckraum ein merklicher Druckabbau und damit einhergehend eine Kolbenverstellung des Servozylinders stattfinden kann.

Das Absperrventil ist bevorzugt als Sitzventil ausgebildet, wobei vorteilhaft im geschlossenen Zustand des Absperrventils ein Dichtkörper auf eine Sitzfläche gedrückt wird, der eine innerhalb der Sitzfläche angeordnete Durchflussöffnung gasdicht abschließt. Insbesondere wegen der an dem Ventil anliegenden hohen Drücke von bis zu 250 bar ist diese Anordnung, beispielsweise im Gegensatz zu einem Schiebeventil, besonders vorteilhaft, da mit wachsendem Druck auch der Anpressdruck wächst, so dass eine hohe Dichtwirkung auch über lange Zeit gewährleistet ist.

Vorteilhafter Weise sind das Absperrventil und der Servozylinder als integrales Bauteil ausgebildet. Dies ermöglicht eine raumsparende Ausbildung der erfindungsgemäßen Anblasvorrichtung. Ferner ermöglicht die integrale Bauweise eine exakte Ausrichtung des Kolbens des Servozylinders zum Stellen des Absperrventils.

In einer bevorzugten Ausführungsform der Erfindung bildet der Kolben des Servozylinders gleichzeitig auch den Dichtkörper des Absperrventils. Auf diese Weise kann auf ein bewegliches Bauteil, nämlich einen separaten Dichtkörper des Absperrventils verzichtet werden, was in konstruktiver Hinsicht besonders vorteilhaft ist. Ebenso vorteilhaft ist es, dass für die über den Kolben des Servozylinders übertragene Stellkraft des Absperrventils kein zusätzliches Übertragungselement, wie beispielsweise eine Kolbenstange zwischen Kolben und Dichtkörper, benötigt wird. Der Kolben des Servozylinders wird in der Schließstellung des Absperrventils direkt gegen dessen Sitzfläche gedrückt und schließt die Leitungszufüh= rung zwischen Druckgasspeicher und Tauchzellen druckdicht ab.

Vorteilhaft bilden Servozylinder und Absperrventil eine Baueinheit, die durch die Ausbildung des Kolbens des Servozylinders als Dichtkörper des Absperrventils besonders kompakt gestaltet werden kann, was hinsichtlich des begrenzten Raumangebots in einem Unterseeboot nicht unerheblich ist.

Zum Regeln des Servodrucks ist dem Servozylinder vorteilhafterweise eine Druckregeleinrichtung zugeordnet. Diese Druckregeleinrichtung regelt das Ablassen des Druckgases in dem regelbaren Druckraum des Servozylinders in Abhängigkeit von dem Befüllungsgrad und Druckzustand in der Tauchzelle, um zu verhindern, dass die Tauchzellen mit einem unzulässig hohem Druck beaufschlagt werden, der abhängig von der Tauchtiefe variiert.

Hierzu ist vorteilhaft ein Druckraum, vorzugsweise der regelbare Druckraum fluidisch leitend mit der Druckregeleinrichtung verbunden. Bevorzugt ist die Druckregeleinrichtung an den Gasablass des regelbaren Druckraums angebunden, über den der Druck in diesem Druckraum verringert werden kann.

Zweckmäßiger Weise weist die Druckregeleinrichtung ein Schaltventil zum Aktivieren des Anblasvorgangs auf. Das Schaltventil ist vorteilhaft als ein Absperrventil ausgebildet und vorzugsweise so angeordnet, dass es die fluidisch leitende Verbindung zwischen dem Servozylinder und der Druckregeleinrichtung entweder verschließt, so dass der Druck in dem regelbaren Druckraum des Servozylinders dem in dem Druckgasspeicher entspricht, oder die Verbindung zwischen Servozylinder und Druckregeleinrichtung frei gibt; so dass die Druckregeleinrichtung eine Druckänderung in dem regelbaren Druckraum des Servozylinders veranlassen kann.

Das Schaltventil ist vorteilhaft sowohl pneumatisch als auch manuell betätigbar ausgebildet. Hierzu ist es zweckdienlich so an einer Druckluftversorgung angeschlossen, dass die Druckluft nach Betätigen eines Schaltelements das Schaltventil aktiviert, d.h., öffnet. Aus Sicherheitsgründen, beispielsweise im Falle einer Beschädigung oder des Totalausfalls der Pneumatik, ist es vorteilhaft, dass das Schaltventil auch manuell betätigt werden kann, so dass sichergestellt ist, dass die Anblasvorrichtung ggf. auch manuell aktiviert werden kann.

Bevorzugt weist die Druckregeleinrichtung ein Absperrventil auf. Das Absperrventil ist so angeordnet, dass es den Gasablass des regelbaren Druckraums versperrt oder frei gibt.

Vorteilhaft ist das Absperrventil an einem doppelt wirkenden Regelzylinder angebunden, der zu einer Seite mit dem Umgebungsdruck des Unterseebootes und zur anderen Seite mit dem Tauchzellendruck beaufschlagt ist. Je nach Druckverhältnis von Umgebungsdruck und Tauchzellendruck stellt der Regelzylinder das Absperrventil in eine geöffnete oder eine verschlossene Stellung, so dass stets sichergestellt ist, dass die Tauchzellen mit dem sich in Abhängigkeit von der Tauchtiefe bzw. den dort herrschenden Druckverhältnissen ändernden zulässigen Druck beaufschlagt werden.

Die Erfindung ist nachfolgend anhand von in einer Zeichnung dargestellten Ausführungsbeispielen erläutert. Es zeigen:

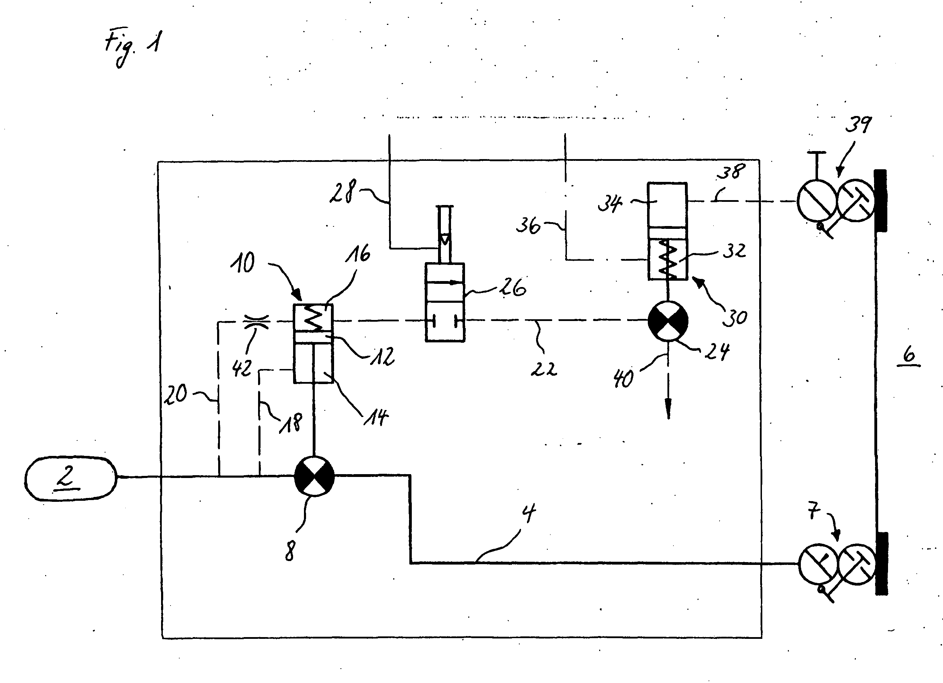

- Fig. 1: eine Schaltbild der erfindungsgemäßen Anblasvorrichtung und
- Fig. 2: eine Schnittansicht des Absperrventils mit angebundener Druckregeleinrichtung der erfindungsgemäßen Anblasvorrichtung.

Druckgasflaschen, die im Weiteren als Druckspeicher 2 bezeichnet sind, in denen Luft bei einem Druck von 250 bar gespeichert ist, stehen über einer Versorgungsleitung 4 mit einer Tauchzelle 6, gesichert über ein Rückschlagventil und eine Bordabsperrarmatur 7, in Leitungsverbindung. Innerhalb der Versorgungsleitung 4 ist ein Absperrventil 8 angeordnet. Im normalen Betrieb des Unterseeboots verschließt das Absperrventil 8 die Versorgungsleitung 4, so dass die in dem Druckspeicher 2 gespeicherte Druckluft nicht in die Tauchzelle 6 entweichen kann. Zum Notanblasen der Tauchzelle 6 wird das Absperrventil 8 geöffnet und die Versorgungsleitung 4 zwischen Druckspeicher 2 und der Tauchzelle 6 freigegeben.

Zum Stellen des Absperrventils 8 ist an diesem ein doppeltwirkender Servozylinder 10 angebunden. Dieser weist einen Kolben 12 auf, der den Zylinderinnenraum in eine erste Druckkammer 14 und eine zweite Druckkammer 16 aufteilt.

Zwischen dem Druckspeicher 2 und dem Absperrventil 8 zweigen von der Versorgungsleitung 4 die Versorgungsleitung 18 und die Versorgungsleitung 20 ab. Die Versorgungsleitung 18 mündet in der ersten Druckkammer 14 des Servozylinders 10 und beaufschlagt diese mit dem in dem Druckspeicher 2 herrschenden Luftdruck. Die Versorgungsleitung 20 stellt die Druckluftversorgung der zweiten Druckkammer 16 her.

An die zweite Druckkammer 16 ist eine weitere Leitungsverbindung angebunden, eine Regelleitung 22. Ausgehend von der zweiten Druckkammer 16 mündet die Regelleitung 22 in einem Absperrventil 24, wobei zwischen der Druckkammer 16 und dem Absperrventil 24 ein weiteres Absperrventil 26 innerhalb der Regelleitung 22 angeordnet ist.

Das Absperrventil 26 ist sowohl pneumatisch als auch manuell betätigbar ausgebildet. Zur pneumatischen Betätigung ist es über eine Versorgungsleitung 28 an eine separate Druckluftversorgung angebunden, die in den Figuren nicht dargestellt ist. Nicht betätigt sperrt das Absperrventil 26 die Regelleitung 22, so dass keine Druckluft aus der zweiten Druckkammer 16 des Servozylinders 10 entweichen kann und dort, ebenso wie in der ersten Druckkammer 14, der in dem Druckspeicher 2 herrschende Druck anliegt.

An dem die Regelleitung 22 begrenzenden Absperrventil 24 ist ein Regelzylinder 30 angebunden, über den das Absperrventil 24 gestellt wird. Ähnlich wie der Servozylinder 10 ist auch der Regelzylinder 30 doppeltwirkend ausgebildet und weist eine erste Druckkammer 32 und eine zweite Druckkammer 34 auf. In die erste Druckkammer 32 des Regelzylinders 30 mündet eine Druckleitung 36, über die die Druckkammer 32 mit dem das Unterseeboot umgebenden Wasserdruck beaufschlagt ist. Auch in die zweite Druckkammer 34 mündet eine Druckleitung 38. Diese steht mit der Tauchzelle 6, gesichert durch eine doppelte Bordabsperrung 39, in Verbindung und beaufschlagt die zweite Druckkammer 34 mit dem Tauchzellendruck. Je nachdem, ob in der ersten Druckkammer 32 oder in der zweiten Druckkammer 34 ein Überdruck gegenüber der jeweils anderen Druckkammer 32 bzw. 34 herrscht, wird das Absperrventil 24 von dem Regelzylinder 30 in eine die Regelleitung 22 öffnende oder in eine die Regelleitung 22 sperrende Stellung gestellt.

Zum Aktivieren der Anblasvorrichtung wird das Absperrventil 26, wie oben erwähnt, vorzugsweise pneumatisch oder bei Versagen der Pneumatik manuell betätigt und öffnet die Regelleitung 22, so dass der in der zweiten Druckkammer 16 des Servozylinders 10 herrschende Luftdruck auch an dem Absperrventil 24 anliegt. Der zu Beginn des Anblasens der Tauchzelle 6 größere Wasserdruck steuert das Absperrventil 24 so, dass die Regelleitung 22 mit einer Entlüftungsöffnung 40 leitungsverbunden wird. Über diese Entlüftungsöffnung 40 entweicht die Druckluft in das innere des Unterseebootes.

Der Druck in der Druckkammer 16 des Servozylinders 10 verringert sich, da in der Versorgungsleitung 20 von dem Druckspeicher 2 zu der Druckkammer 16 eine Drossel 42 angeordnet ist, die gewährleistet, dass in die Druckkammer 16 eine geringere Druckluftmenge nachströmt, als die Druckluftmenge, die über die Regelleitung 22 abgeführt wird.

Auf diese Weise entsteht in der ersten Druckkammer 14 des Servozylinders 10 ein Überdruck gegenüber der zweiten Druckkammer 16. Der Kolben 12 wird in Richtung der zweiten Druckkammer 16 bewegt, was das an dem Servozylinder 10 angekoppelte Absperrventil 8 in eine die Versorgungsleitung 4 öffnende Stellung stellt.

Druckluft kann nun über die Versorgungsleitung 4 in die Tauchzelle 6 strömen, bis ein vorher eingestellter Druck in der Tauchzelle 6 erreicht ist. Übersteigt der Druck in der Tauchzelle den vorher eingestellten Wert, führt dies dazu, dass der Regelzylinder 30 das Absperrventil 24 in eine die Regelleitung 22 verschließende Stellung stellt.

Hieraus resultiert ein Druckanstieg in der Druckkammer 16 des Servozylinders 10, so dass der Kolben 12, unterstützt von einer in der zweiten Druckkammer 16 angeordneten Druckfeder 44, das Absperrventil 8 in eine die Versorgungsleitung 4 verschließende Stellung stellt.

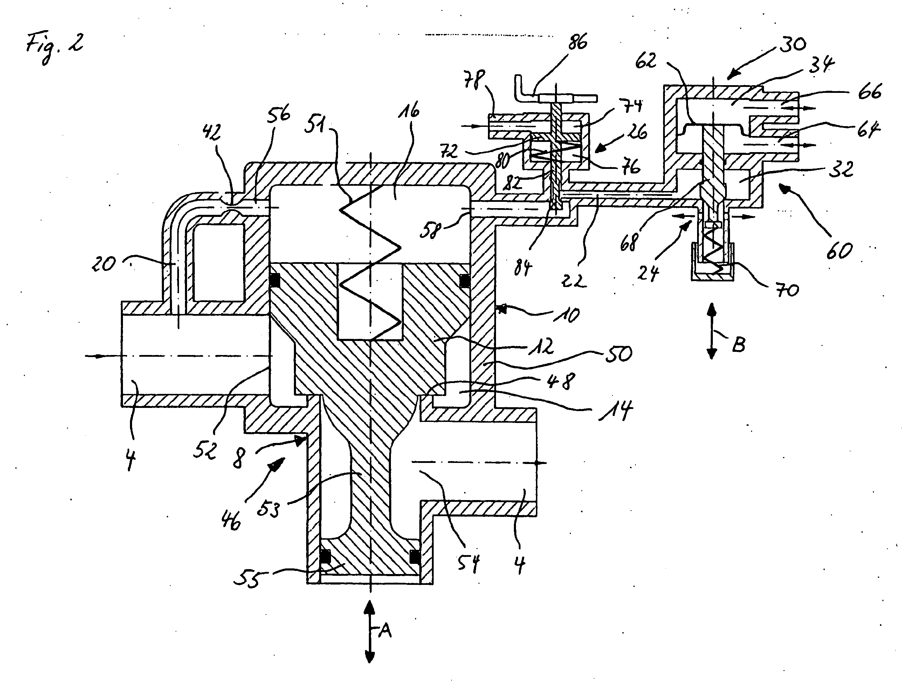

Die Figur 2 zeigt eine konstruktive Ausführungsform der oben vom Funktionsprinzip erläuterten Anblasvorrichtung in einer Querschnittsansicht. Der Druckspeicher 2 und die Tauchzelle 6 sind in dieser Figur nicht dargestellt. Der Servozylinder 10. und das Absperrventil 8 sind als ein integrales Druckregelventil 46 ausgeführt. Das:Druckregelventil 46 ist innerhalb der Versorgungsleitung 4 angeordnet. Der Kolben 12 des Servozylinders 10 bildet gleichzeitig den Dichtkörper des als Sitzventil ausgebildeten Absperrventils 8 und liegt auf einer ringförmigen Sitzfläche 48, die Versorgungsleitung 4 sperrend, auf. Der Kolben 12 ist in Bewegungsrichtung A verschiebbar geführt. In Richtung der Sitzfläche 48 verjüngt sich der Kolben 12 des Servozylinders 10, so dass sich im Bereich dieser Verjüngung ein ringförmiger Spalt zwischen dem Kolben 12 und der Gehäusewandung 50 des Servozylinders 10 bzw. des Regelventils 46 ergibt. Dieser Spalt bildet die erste Druckkammer 14 des Servozylinders 10. Auf der der Sitzfläche 48 abgewandten Seite des Kolbens 12 wird von diesem und der Gehäusewandung 50 die zweite Druckkammer 16 gebildet. In der zweiten Druckkammer 16 ist zwischen der Gehäusewandung 50 und dem Kolben 12 eine Druckfeder 51 so angeordnet, dass sie den Kolben 12 bzw. den Dichtkörper des Absperrventils 8 in eine die Versorgungsleitung 4 sperrende Ruhestellung zwingt.

Druckspeicherseitig weist die Gehäusewandung 50 eine Einlassöffnung 52 auf, in die die Versorgungsleitung 4 in die erste Druckkammer 14 des Servozylinders 10 mündet und die Druckkammer 14 mit dem Druck des Druckspeichers 2 beaufschlagt. Im Bereich des Absperrventils 8 weist die Gehäusewandung 50 eine weitere Durchbrechung auf, die die Auslassöffnung 54 bildet, an der der tauchzellenseitige Abschnitt der Versorgungsleitung 4 angebunden ist. Die Einlassöffnung 52 und die Auslassöffnung 54 sind so in Bewegungsrichtung A des Kolbens 12 versetzt angeordnet, dass sie sich auf verschiedenen Seiten des Kontaktes zwischen Kolben 12 und Sitzfläche 48 befinden.

Der Kolben 12 weist im Bereich des Servozylinders 10 seinen größten Durchmesser auf, er ist dort mittels eines in einer Nut angeordneten O-Rings 47 gegenüber der Zylinderwand abgedichtet. An seiner oberen Stirnseite weist er eine Sacklochbohrung zur Aufnahme und Führung einer Feder 51 auf.

In Fig. 2 nach unten hin ist der Kolben 12 zunächst konisch abgeschrägt ausgebildet und geht zu einem Abschnitt kleineren Durchmessers über, welcher mit seiner stirnseitigen Ringfläche zur Anlage auf der gegenüberliegenden Sitzfläche 48 ausgebildet ist. Von da verjüngt sich der Kolben 12 nach unten hin weiter zu einem Kolbenabschnitt 53, um in dem dort gebildeten Durchgangskanal einen möglichst großen freien Querschnitt um den Kolben 12 herum zu gewährleisten.

Um ein Verkanten des Kolbens 12 und eine sichere Führung zu gewährleisten, weist der Kolben 12 nahe seinem unteren Ende einen wieder aufgeweiterten Kolbenabschnitt 55 auf, der einen größeren Durchmesser als im Bereich des Kolbenabschnitts 53 aufweist. Da die Flächen des Ventilsitzes 48 und des Kolbens 55 gleich sind, ist das Ventil 8 gegen die Auslassöffnung 54 bzw. die Versorgungsleitung 4 druckausgleichend.

Auch der Kolbenabschnitt 55 ist mittels eines umlaufenden O-Rings 49 gegenüber dem in diesem Bereich zylindrischen Gehäuseabschnitt abgedichtet.

Auf Seiten der Einlassöffnung 52 zweigt von der Versorgungsleitung 4 die Versorgungsleitung 20 ab, die über eine Durchbrechung 56 in der Gehäusewandung 50 des Servozylinders 10 eine Leitungsverbindung zu der zweiten Druckkammer 16 herstellt. In der Versorgungsleitung 20 ist eine Drossel 42 angeordnet.

An einer zweiten Durchbrechung 58 der Gehäusewandung 50 im Bereich der Druckkammer 16 ist die Regelleitung 22 angebunden, an deren von dem Servozylinder 10 beabstandeten Ende das Absperrventil 24 mit einem damit in Verbindung stehender Regelzylinder 30 angeordnet ist.

Ähnlich dem Regelventil 46 ist auch das Absperrventil 24 und der Regelzylinder 30 als integrale Baueinheit 60 ausgebildet. Der Regelzylinder 30 weist eine Membran 62 auf, die den Innenraum des Regelzylinders 30 druckdicht in eine erste Druckkammer 32 und eine zweite Druckkammer 34 aufteilt. Die Druckkammer 32 weist einen Anschluss 64 auf, über den sie mit dem das Unterseeboot umgebenden Wasserdruck beaufschlagbar ist. In ähnlicher Weise ist an der Druckkammer 34 ein Anschluss 66 angeordnet, über den die Druckkammer 34 mit dem Tauchzellendruck beaufschlagt werden kann.

An der der Druckkammer 32 zugewandten Seite der Membran 62 ist ein Kolben 68 in eine Bewegungsrichtung B beweglich angeordnet. Im Bereich des von der Membran 62 beabstandeten Endes des Kolbens 68 verjüngt sich dieser kegelförmig und bildet den kegelförmigen Dichtkörper des Absperrventils 24, mit dem die Regelleitung 22 gegenüber dem Innenraum des Unterseebootes geöffnet bzw. verschlossen werden kann, je nachdem, in welchem Verhältnis der Druck in der ersten Druckkammer 32 zu dem Druck der zweiten Druckkammer 34 steht. Am freien Ende des Kolbens 68 ist eine Druckfeder 70 so angeordnet, dass sie den Kolben 68 in eine die Regelleitung öffnende Ruheposition zwingt.

Zwischen der Druckkammer 16 des Servozylinders 10 und der Baueinheit 60 ist innerhalb der Regelleitung 22 das Absperrventil 26 angeordnet. Das Absperrventil 26 weist einen einfach wirkenden Zylinder mit einem Kolben 72 auf, der den Zylinderinnenraum in einen ersten Raum 74 und einen zweiten Raum 76 aufteilt. Der Raum 74 weist einen Anschluss 78 auf, über den der Zylinder an einem in Fig. 2 nicht dargestellten Druckluftsystem angebunden ist. Durch Beaufschlagen des Raumes 74 mit Druckluft, ist der Kolben 72 gegen die Wirkung einer in dem Raum 76 angeordneten Druckfeder 80 bewegbar.

An dem Kolben 72 ist eine Kolbenstange 82 angeordnet, die sich normal zu dem Kolben 72 sowohl in eine dem Raum 74 zugewandten Richtung als auch in eine dem Raum 76 zugewandten Richtung erstreckt. Dabei greift der dem Raum 76 zugewandte Teil der Kolbenstange 82 in die Regelleitung 22 ein, wobei ein Dichtkörper 84, der eine konische Sitzfläche aufweist und am Ende dieses Teils der Kolbenstange 82 angeordnet ist, die Regelleitung 22 verschließt bzw. freigibt.

Der dem Raum 74 zugewandte zweite Teil der Kolbenstange 82 durchbricht das Gehäuse des Absperrventils 26. An seinem Ende ist eine Handhabung 86 angeordnet, mit der das Absperrventil 26 alternativ betätigt werden kann, beispielsweise im Falle einer Beschädigung der über den Anschluss 78 an dem Absperrventils 26 angebundenen Pneumatik des Druckluftsystems.

### Bezugszeichenliste

- 2: Druckspeicher
- 4: Versorgungsleitung
- 6: Tauchzelle
- 7: Rückschlagventil mit Bordabsperrarmatur
- 8: Absperrventil
- 10: Servozylinder
- 12: Kolben
- 14: Druckkammer
- 16: Druckkammer
- 18: Versorgungsleitung
- 20: Versorgungsleitung
- 22: Regelleitung
- 24: Absperrventil
- 26: Absperrventil
- 28: Versorgungsleitung
- 30: Regelzylinder
- 32: Druckkammer
- 34: Druckkammer
- 36: Druckleitung
- 38: Druckleitung
- 39: Bordabsperrung
- 40: Entlüftungsöffnung
- 42: Drossel
- 44: Druckfeder
- 46: Regelventil
- 47: O-Ring
- 48: Sitzfläche
- 49: O-Ring
- 50: Gehäusewandung
- 51: Druckfeder
- 52: Einlassöffnung
- 53: Kolbenabschnitt
- 54: Auslassöffnung
- 55: Kolbenabschnitt
- 56: Durchbrechung
- 58: Durchbrechung
- 60: Baueinheit
- 62: Membran
- 64: Anschluss
- 66: Anschluss
- 68: Kolben
- 70: Druckfeder
- 72: Kolben
- 74: Raum
- 76: Raum
- 78: Anschluss
- 80: Druckfeder
- 82: Kolbenstange
- 84: Dichtkörper
- 86: Handhabung

- A: Bewegungsrichtung
- B: Bewegungsrichtung

## Patentansprüche

1. Anblasvorrichtung für ein Unterseeboot mit mindestens einem Druckgasspeicher (2) zum Befüllen mindestens einer Tauchzelle (6) mit Druckgas, mit einer Leitungsverbindung (4) zwischen dem Druckgasspeicher (2) und der Tauchzelle (6) und mit einem in der Leitungsverbindung (4) angeordneten Absperrventil (8), **dadurch gekennzeichnet, dass** das Absperrventil servogesteuert ist, wobei zum Stellen des Absperrventils (8) ein Senrozylinder (10) vorgesehen ist, dessen Kolben (12) zweiseitig mit Druckgas beaufschlagbar und der Druck zu einer Seite des Kolbens (12) regelbar ist.

2. Anblasvorrichtung nach Anspruch 1, **dadurch gekennzeichnet, dass** die Kraft zum Stellen des Absperrventils (8) durch Druckgas, vorzugsweise aus dem Druckgasspeicher (2) erzeugt wird.

3. Anblasvorrichtung nach einem der vorangehenden Ansprüche, **dadurch gekennzeichnet, dass** Druckgasspeicher (2) und Servozylinder (10) gedrosselt leitungsverbunden sind.

4. Anblasvorrichtung nach einem der vorangehenden Ansprüche, **dadurch gekennzeichnet, dass** das Absperrventil (8) als Sitzventil ausgebildet ist.

5. Anblasvorrichtung nach einem der vorangehenden Ansprüche, **dadurch gekennzeichnet, dass** das Absperrventil (8) und der Servozylinder (10) als ein integrales Bauteil ausgebildet sind.

6. Anblasvorrichtung nach Anspruch 5, **dadurch gekennzeichnet, dass** der Kolben (12) des Servozylinders (10) als Dichtkörper des Absperrventils (8) ausgebildet ist.

7. Anblasvorrichtung nach einem der vorangehenden Ansprüche, **dadurch gekennzeichnet, dass** dem Servozylinder (10) zum Regeln des Servodrucks eine Druckregeleinrichtung (22, 24, 26, 30) zugeordnet ist.

8. Anblasvorrichtung nach Anspruch 7, **dadurch gekennzeichnet, dass** ein Druckraum (16) des Servozylinders (10) fluidisch leitend mit der Druckregeleinrichtung (22, 24, 26, 30) verbunden ist.

9. Anblasvorrichtung nach einem der Ansprüche 7 und 8, **dadurch gekennzeichnet, dass** die Druckregeleinrichtung (22, 24, 26, 30) zum Aktivieren des Anblasvorgangs ein Schaltventil (26) aufweist.

10. Anblasvorrichtung nach Anspruch 9, **dadurch gekennzeichnet, dass** das Schaltventil (26) sowohl pneumatisch als auch manuell betätigbar ausgebildet ist.

11. Anblasvorrichtung nach einem der Ansprüche 7 bis 10, **dadurch gekennzeichnet, dass** die Druckregeleinrichtung (22, 24, 26, 30) ein Absperrventil (24) aufweist.

12. Anblasvomchtung nach Anspruch 11 **dadurch gekennzeichnet, dass** das Absperrventil (24) an einem doppelt wirkenden Regelzylinder (30) angebunden ist, der zu einer Seite mit dem Umgebungsdruck des Unterseebootes und zu einer zweiten Seite mit dem Tauchzellendruck beaufschlagt ist.

## Claims

1. A blowing device for a submarine with at least one pressurised gas storage means (2) for filling at least one ballast tank (6) with pressurised gas, with a conduit connection (4) between the pressurised gas storage means (2) and the ballast tank (6), and with a shut-off valve (8) arranged in the conduit connection (4), **characterised in that** the shut-off valve is servo-controlled wherein a servo-cylinder (10) is provided for adjusting the shut-off valve (8), whose piston (12) may be impinged on both sides with pressurised gas, and the pressure to one side of the piston (12) may be controlled with a closed loop.

2. A blowing device according to claim 1, **characterised in that** the force for regulating the shut-off valve (8) is produced by pressurised gas, preferably from the pressurised gas storage means (2).

3. A blowing device according to one of the preceding claims, **characterised in that** the pressurised gas storage device (2) and the servo-cylinder (10) are conductingly connected in a throttled manner.

4. A blowing device according to one of the preceding claims, **characterised in that** the shut-off valve (8) is designed as a seat valve.

5. A blowing device according to one of the preceding claims, **characterised in that** the shut-off valve (8) and the servo-cylinder (10) are designed as an integral component.

6. A blowing device according to claim 5, **characterised in that** the piston (12) of the servo-cylinder (10) is designed as a sealing body of the shut-off valve (8).

7. A blowing device according to one of the preceding claims, **characterised in that** a pressure closed-loop control device (22, 24, 26, 30) is assigned to the servo-cylinder (10) for the closed-loop control of the servo-pressure.

8. A blowing device according to claim 7, **characterised in that** a pressure space (16) of the servo-cylinder (10) is connected in a fluid leading manner to the pressure closed-loop control device (22, 24, 26, 30).

9. A blowing device according to one of the claims 7 and 8, **characterised in that** the pressure closed-loop control device (22, 24, 26, 30) comprises a switch valve (26) for activating the blowing procedure.

10. A blowing device according to claim 9, **characterised in that** the switch valve (26) is designed such that it may be actuated pneumatically as well as manually.

11. A blowing device according to one of the claims 7 to 10, **characterised in that** the pressure closed-loop control device (22, 24, 26, 30) comprises a shut-off valve (24).

12. A blowing device according to claim 11, **characterised in that** the shut-off valve (24) is connected to a dually acting closed-loop control cylinder (30), which to one side is impinged by the ambient pressure of the submarine and to the other side by the ballast tank pressure.

## Revendications

1. Dispositif de soufflage pour un sous-marin, comprenant au moins un réservoir accumulateur de gaz sous pression (2), destiné à assurer le remplissage d'au moins un ballast de plongée (6) avec du gaz sous pression, ainsi qu'une liaison par conduit (4) entre le réservoir accumulateur de gaz sous pression (2) et le ballast de plongée (6) et une vanne d'arrêt (8) disposée dans la liaison par conduit (4), **caractérisé en ce que** la vanne d'arrêt est servocommandée, étant précisé que, pour le positionnement de la vanne d'arrêt (8), il est prévu un cylindre d'asservissement (10) dont le piston (12) peut être sollicité des deux côtés avec du gaz sous pression, et la pression est réglable d'un côté du piston (12).

2. Dispositif de soufflage selon la revendication 1, **caractérisé en ce que** la force pour le positionnement de la vanne d'arrêt (8) est engendrée par du gaz sous pression, de préférence issu du réservoir accumulateur de gaz sous pression (2).

3. Dispositif de soufflage selon l'une des revendications précédentes, **caractérisé en ce que** le réservoir accumulateur de gaz sous pression (2) et le cylindre d'asservissement (10) sont reliés par un conduit avec étranglement.

4. Dispositif de soufflage selon l'une des revendications précédentes, **caractérisé en ce que** la vanne d'arrêt (8) est conçue sous forme d'une vanne à siège.

5. Dispositif de soufflage selon l'une des revendications précédentes, **caractérisé en ce que** la vanne d'arrêt (8) et le cylindre d'asservissement (10) sont réalisés sous forme d'un composant en une pièce.

6. Dispositif de soufflage selon la revendication 5, **caractérisé en ce que** le piston (12) du cylindre d'asservissement (10) est conçu comme corps d'étanchéité de la vanne d'arrêt (8).

7. Dispositif de soufflage selon l'une des revendications précédentes, **caractérisé en ce qu'**au cylindre d'asservissement (10) est associé un régulateur de pression (22, 24, 26, 30) pour le réglage de la pression d'asservissement.

8. Dispositif de soufflage selon la revendication 7, **caractérisé en ce qu'**une chambre de pression (16) du cylindre d'asservissement (10) est reliée au régulateur de pression (22, 24, 26, 30) par une liaison conductrice de fluide.

9. Dispositif de soufflage selon l'une des revendications 7 et 8, **caractérisé en ce que** le régulateur de pression (22, 24, 26, 30) présente une vanne de commutation (26) pour l'activation de l'opération de soufflage.

10. Dispositif de soufflage selon la revendication 9, **caractérisé en ce que** la vanne de commutation (26) est conçue pour être actionnable aussi bien par voie pneumatique que manuellement.

11. Dispositif de soufflage selon l'une des revendications 7 à 10, **caractérisé en ce que** le régulateur de pression (22, 24, 26, 30) présente une vanne d'arrêt (24).

12. Dispositif de soufflage selon la revendication 11, **caractérisé en ce que** la vanne d'arrêt (24) est raccordée à un cylindre de régulation (30) à double effet, qui est sollicité, d'un côté, avec la pression ambiante du sous-marin et, sur un second côté, avec la pression du ballast de plongée.
